# EUROPÄISCHE PATENTANMELDUNG

(11) **EP 4 454 807 A2**
(43) Veröffentlichungstag der Anmeldung: **30.10.2024**
(21) Anmeldenummer: 24200210.3
(22) Anmeldetag: 13.09.2024
(51) Int. Cl.: B23Q 1/70, B23Q 5/10, B23Q 11/12, B23Q 11/14

(54) **MOTORSPINDEL**

(71) Anmelder: Maschinenfabrik Berthold Hermle AG, 78559 Gosheim (DE)
(72) Erfinder: Bernhard, Franz-Xaver, 78549 Spaichingen (DE); Mattes, Uwe, 78588 Denkingen (DE); Schwarz, Günter, 78595 Hausen ob Verena (DE)
(74) Vertreter: Patentanwälte Magenbauer & Kollegen Partnerschaft mbB

(57) **Zusammenfassung**

Die Erfindung betrifft eine Motorspindel (1) mit einem längs einer Statorachse (24) erstreckten, hülsenförmigen Stator (11), der ein erstes Magnetsystem (21) aufweist, und mit einem Rotor (51), der eine längs einer Rotorachse (79) erstreckte Rotorwelle (55) und ein zweites Magnetsystem (80) aufweist, wobei die Rotorwelle (55) von einer längs der Rotorachse (79) erstreckten Aufnahmebohrung (56) durchsetzt ist, die zur Aufnahme eines Werkzeugspanners (31) ausgebildet ist. Erfindungsgemäß ist vorgesehen, dass die Rotorwelle (55) von Kühlbohrungen (108, 109) durchsetzt ist, die an einem Übergabebereich (107) ausmünden, der einem zweiten Endbereich (82) der Rotorwelle (55) ausgebildet ist.

## Beschreibung

Die Erfindung betrifft eine Motorspindel zum Antreiben eines Bearbeitungswerkzeugs, mit einem längs einer Statorachse erstreckten, hülsenförmigen Stator, der ein erstes Magnetsystem, eine erste Kupplungsaufnahme und eine zweite Kupplungsaufnahme aufweist, und mit einem Rotor, der eine längs einer Rotorachse erstreckte Rotorwelle, ein zweites Magnetsystem, ein erstes Kupplungsteil und ein zweites Kupplungsteil aufweist, wobei das erste Kupplungsteil an einem ersten Endbereich der Rotorwelle angeordnet ist und zur Festlegung an der ersten Kupplungsaufnahme ausgebildet ist und mit einem als axiales Festlager ausgebildeten ersten Drehlager drehbeweglich um die Rotorachse an der Rotorwelle gelagert ist und wobei das zweite Kupplungsteil an einem zweiten Endbereich der Rotorwelle angeordnet ist und zur Festlegung an der zweiten Kupplungsaufnahme ausgebildet ist und mit einem als axiales Loslager ausgebildeten zweiten Drehlager drehbeweglich um die Rotorachse an der Rotorwelle gelagert ist, wobei die Rotorwelle von einer längs der Rotorachse erstreckten Aufnahmebohrung durchsetzt ist, die zur Aufnahme eines Werkzeugspanners ausgebildet ist.

Die EP 3 998 134 A2 offenbart eine gattungsgemäße Motorspindel mit einem hülsenförmigen Stator, der eine erste Kupplungsaufnahme und eine zweite Kupplungsaufnahme aufweist, mit einem Rotor, der ein erstes Kupplungsteil mit axialem Festlager und ein zweites Kupplungsteil mit axialem Loslager aufweist, die zur Festlegung an der jeweiligen Kupplungsaufnahme ausgebildet sind, wobei das axiale Loslager einen auf der Rotorwelle festgelegten Innenring und einen koaxial zum Innenring angeordneten und am zweiten Kupplungsteil festgelegten Außenring umfasst, wobei das zweite Kupplungsteil parallel zur Rotorachse zwischen einer ersten Funktionsstellung und einer zweiten Funktionsstellung längs eines Verstellwegs axialbeweglich an der Rotorwelle aufgenommen ist und wobei für den gesamten Verstellweg zwischen einer ersten Axialfläche des Innenrings und dem zweiten Kupplungsteil ein erster Abstand vorliegt und zwischen einer zweiten Axialfläche des Innenrings und dem zweiten Kupplungsteil ein zweiter Abstand vorliegt.

Die Aufgabe der Erfindung besteht darin, die Langlebigkeit des aus der europäischen Patentanmeldung EP 3 998 134 A2 bekannten Rotors der Motorspindel zu verbessern.

Diese Aufgabe wird für die Motorspindel der eingangs genannten Art dadurch gelöst, dass die Rotorwelle von Kühlbohrungen durchsetzt ist, die an einem Übergabebereich ausmünden, der am zweiten Endbereich der Rotorwelle ausgebildet ist.

Die Kühlbohrungen in der Rotorwelle ermöglichen eine gezielte Kühlung des zweiten Magnetsystems, des ersten Drehlagers und des zweiten Drehlagers.

Bei dem zweiten Magnetsystem handelt es sich in Abhängigkeit von der technischen Aufbauweise der Motorspindel beispielsweise um eine Permanentmagnetanordnung oder um eine Anordnung von Magnetspulen, die mit dem ersten Magnetsystem im Stator einen Elektromotor bilden. In jedem Fall muss bei einem bestimmungsgemäßen Betrieb der Motorspindel, die mit Drehzahlen von bis zu 20.000 Umdrehungen pro Minute betrieben werden kann, davon ausgegangen werden, dass aufgrund der magnetischen Wechselwirkungen zwischen dem ersten Magnetsystem im Stator und dem zweiten Magnetsystem am Rotor zu Verlustwärme sowohl im ersten Magnetsystem als auch im zweiten Magnetsystem kommt.

Wird durch das erste Magnetsystem und das zweite Magnetsystem der Motorspindel beispielsweise eine elektrische Asynchronmaschine gebildet, sind bei einem bestimmungsgemäßen Gebrauch der Motorspindel insbesondere die folgenden Verluste von Bedeutung: Verluste durch Hysteresisarbeit, Verluste durch Wirbelströme, Stromwärmeverluste, Verluste durch Luftreibung im Luftspalt zwischen Rotor und Stator.

Die Verlustwärme des zweiten Magnetsystems sowie die im ersten Drehlager und im zweiten Drehlager auftretende, insbesondere durch Rollreibung der Wälzkörper hervorgerufene, Verlustwärme führen zu lokalen unterschiedlichen Erwärmungen am Rotor.

Durch die Kühlung des zweiten Magnetsystems kann der durch das erste Magnetsystem und das zweite Magnetsystem gebildete Elektromotor an einem vorteilhaften Betriebspunkt oder in einem vorteilhaften Betriebsfenster betrieben werden, bei dem ein möglichst hoher elektrischer Wirkungsgrad gewährleistet werden kann. Beispielsweise kann durch die Kühlung ein Anstieg eines elektrischen Innenwiderstands in einer Magnetspulenanordnung des zweiten Magnetsystems und/oder eine Schwächung von ferromagnetischen und ferroelektrischen Eigenschaften von Permanentmagneten des zweiten Magnetsystems vermieden werden.

Durch die Kühlung des ersten Drehlagers und des zweiten Drehlagers werden Verspannungen in den Drehlagern, die durch wärmebedingte Ausdehnungen auftreten können, reduziert. Hierdurch können die Drehlager, bei denen es sich typischerweise um Wälzlager, insbesondere um Kugellager oder um Schrägkugellager oder um Zylinderrollenlager oder um Anordnungen mehrerer solcher Wälzlager, handelt, in einer Weise montiert werden, mit der einerseits eine maximale Lagerlebensdauer und andererseits ein minimales Lagerspiel verwirklicht werden können. Dies gilt insbesondere für das erste Drehlager, das typischerweise durch zwei längs der Rotorachse beabstandet voneinander angeordnete Schrägkugellager in O-Anordnung gebildet wird und das zur Gewährleistung einer vorteilhaften Drehlagerung des Rotors vorgespannt wird. Aufgrund der Kühlung des ersten Drehlagers und der damit einhergehenden Verringerung der wärmebedingten Ausdehnungen des Rotors und der Wälzlager, die das erste Drehlager bilden, kann abweichend von der aus dem Stand der Technik bekannten Motorspindel auf eine Federvorspannung des ersten Drehlagers verzichtet werden. Hierdurch wird eine kostengünstigere Herstellung und vereinfachte Montage des Rotors im Hinblick auf das erste Drehlager ermöglicht.

Insgesamt kann mit der Kühlung des zweiten Magnetsystems die thermische Genauigkeit der kompletten Werkzeugspindel und somit die thermische der gesamten Maschine signifikant verbessert werden.

Bevorzugt ist vorgesehen, dass die Kühlbohrungen bei einem bestimmungsgemäßen Gebrauch der Motorspindel von einer Kühlflüssigkeit durchströmt werden, die an einem Übergabebereich bereitgestellt wird. Ausgehend von dem Übergabebereich strömt die Kühlflüssigkeit mit einem vorgegebenen Druck und einer daraus resultierenden Strömungsgeschwindigkeit durch die Kühlbohrungen, um die erforderliche Wärmeabfuhr von den Drehlagern und dem zweiten Magnetsystem zu gewährleisten. Hierbei wird davon ausgegangen, dass der Rotor aus einem gut wärmeleitenden Material, beispielsweise Stahl, hergestellt ist und somit eine vorteilhafte thermische Kopplung zwischen der Kühlflüssigkeit, die durch die Kühlbohrungen strömt, und den zu kühlenden Komponenten (erstes Drehlager, zweites Drehlager, zweites Magnetsystem) gewährleistet ist.

Besonders bevorzugt ist vorgesehen, dass die Kühlbohrungen derart in der Rotorwelle ausgebildet sind, dass die Kühlflüssigkeit ausgehend von dem Übergabebereich die zu kühlenden Komponenten passiert und anschließend wieder bis zum Übergabebereich geführt wird, um dort abfließen zu können und beispielsweise einem Kühler zugeführt zu werden. Bei einer derartigen Ausgestaltung der Kühlbohrungen weisen diese eine im wesentlichen U-förmige Gestalt auf, wobei die beiden U-Schenkel längs des Rotors erstreckt sind und die fluidisch kommunizierende Verbindung zwischen den beiden U-Schenkeln am ersten Endbereich der Rotorwelle ausgebildet ist.

Vorteilhafte Weiterbildungen der Erfindung sind Gegenstand der Unteransprüche.

Zweckmäßig ist es, wenn der Übergabebereich an einer Innenoberfläche der Aufnahmebohrung ausgebildet ist und dass die Kühlbohrungen in die Aufnahmebohrung ausmünden. Hierdurch wird eine Verwendung des aus der europäischen Patentanmeldung EP 3 998 134 A2 bekannten Stators sowie die Beibehaltung des aus dieser Patentanmeldung bekannten Konzepts des einfach auswechselbaren Rotors für die mit den Kühlbohrungen versehenen Rotorwelle ermöglicht, ohne dass hierzu erhebliche Änderungen am Stator oder am Konzept der Auswechselbarkeit in Kauf genommen werden müssen. Vielmehr wird durch den in radialer Richtung nach innen gewandten Übergabebereich eine Zufuhr von Kühlflüssigkeit in die Kühlbohrungen und gegebenenfalls eine Abfuhr von Kühlflüssigkeit aus den Kühlbohrungen in einem vom Rotor begrenzten Raumbereich ermöglicht, der in keinem Zusammenhang mit dem zweiten Drehlager steht und somit auch keine aufwändige Überarbeitung des zweiten Drehlagers erfordert. Bevorzugt ist vorgesehen, dass die Kühlbohrungen in radialer Richtung nach innen, insbesondere quer zur Rotorachse, in die Aufnahmebohrung ausmünden.

Bevorzugt ist vorgesehen, dass in der Aufnahmebohrung ein Werkzeugspanner angeordnet ist, der an einem ersten Endbereich eine Werkzeugaufnahme aufweist und der an einem zweiten Endbereich mit einem Einspeisebereich versehen ist, die Übergabebohrungen zur Kühlmittelzufuhr an den Übergabebereich und zur Kühlmittelabfuhr von dem Übergabebereich aufweist.

Eine Hauptaufgabe des Werkzeugspanners besteht darin, ein Werkzeug am ersten Endbereich der Rotorwelle sowohl drehfest als auch in allen Raumrichtungen ortsfest festzulegen. Hierzu weist der Werkzeugspanner eine einstellbare Werkzeugkupplung auf, die am ersten Endbereich der Rotorwelle abgestützt ist und durch eine längs der Rotorachse ausgerichteten Betätigungsbewegung zwischen einer Schließstellung und einer Öffnungsstellung einstellbar ist. Die Betätigungsbewegung wird von einem Druckrohr, das sich ausgehend vom ersten Endbereich der Rotorwelle in axialer Richtung längs der Rotorachse bis über den zweiten Endbereich der Rotorwelle hinaus erstreckt, übertragen. Die Bereitstellung der Betätigungsbewegung erfolgt vorzugsweise durch einen beanstandet vom zweiten Endbereich angeordneten Betätigungseinheit, bei der es sich insbesondere um einen hydraulisch betätigten Linearaktor handelt. Ferner kann vorgesehen sein, dass dem Druckrohr eine, insbesondere in der Rotorwelle angeordnete, Federeinrichtung zugeordnet ist, mit der die Werkzeugkupplung in der Schließstellung gehalten wird und lediglich bei Einleitung einer Druckkraft auf das Druckrohr, die durch die Betätigungseinheit, hervorgerufen wird, in die Öffnungsstellung überführt wird. Bevorzugt ist die Federeinrichtung als Tellerfederpaket ausgebildet. Der Werkzeugspanner ist somit linearbeweglich und drehfest in der Aufnahmebohrung der Rotorwelle aufgenommen und vollzieht somit die gleiche Rotationsbewegung wie die Rotorwelle. Ferner ist vorgesehen, dass die Betätigungseinheit, drehfest am Stator festgelegt ist und in einer Weise für eine Kopplung mit der Druckstange ausgebildet ist, dass lediglich eine Druckkraftübertragung, nicht jedoch eine Drehmomentübertragung stattfindet. Beispielhaft ist der Arbeitskolben der Betätigungseinheit ringförmig ausgebildet und umfasst das Druckrohr unter Einhaltung eines Lagerspalts. Ferner ist am Druckrohr benachbart zum Arbeitskolben ein radial nach außen ragender Ringbund ausgebildet, der für eine axiale Anlage einer Stirnfläche des Arbeitskolbens und damit zur Druckkraftübertragung ausgebildet ist.

Eine weitere Aufgabe des Werkzeugspanners besteht in der Kühlmittelzufuhr an den Übergabebereich und in der Kühlmittelabfuhr vom Übergabebereich. Somit dient der Werkzeugspanners auch als Bindeglied zwischen dem an der Rotorwelle ausgebildeten Übergabebereich und einer externen Kühlmittelversorgung sowie Kühlmittelentsorgung für die Motorspindel. Hierzu weist der Werkzeugspanner an dem zweiten Endbereich einen Einspeisebereich auf, der für eine fluidische Kopplung mit dem Übergabebereich ausgebildet ist. Der Einspeisebereich ist vorzugsweise an einer Außenumfangsfläche des zweiten Endbereichs des Werkzeugspanners ausgebildet und umfasst rein exemplarisch eine erste, in radialer Richtung nach außen ausmündenden Übergabebohrung sowie eine zweite, ebenfalls in radialer Richtung ausmündenden Übergabebohrung. Jede der Übergabebohrungen ist jeweils mit einem parallel zur Rotorachse ausgerichteten Fluidkanal verbunden, der an einer axialen zweiten Stirnfläche des zweiten Endbereichs ausmündet. Bevorzugt ist vorgesehen, dass jede der Übergabebohrungen zwischen zwei an der Außenumfangsfläche des zweiten Endbereichs angeordneten Umfangsdichtungen, die insbesondere als O-Ringe ausgebildet sein können, angeordnet ist. Dabei sind die Umfangsdichtungen derart an die Außenumfangsfläche des zweiten Endbereichs sowie an die Aufnahmebohrung angepasst, dass bei einem bestimmungsgemäßen Gebrauch des Werkzeugspanners eine Dichtwirkung zwischen dem zweiten Endbereich und der Aufnahmebohrung gewährleistet ist, sodass dass an dem Übergabebereich bereitgestellte Kühlmittelströme ausschließlich durch jeweils einander zugeordneten Kühlbohrungen und Übergabebohrungen strömen und damit eine zuverlässige Trennung zwischen einem Kühlmittelzulauf und einem Kühlmittelablauf gewährleistet ist. Dementsprechend bildet der Werkzeugspanner einen elementaren Bestandteil des Kühlsystems für den Rotor, wodurch eine kompakte Bauweise für den Rotor gewährleistet werden kann.

Bei einer Weiterbildung der Erfindung ist vorgesehen, dass an der Außenumfangsfläche des Werkzeugspanners im Bereich des Einspeisebereichs wenigstens ein in radialer Richtung nach innen erstreckter Ringkanal ausgebildet ist und dass wenigstens eine im Werkzeugspanner ausgebildete Übergabebohrung in den Ringkanal ausmündet. Der Ringkanal wird durch eine umlaufende Nut in der Außenumfangsfläche des zweiten Endbereichs des Werkzeugspanners gebildet, wobei diese Nut als radial nach innen gerichteter Einstich in die Außenumfangsfläche hergestellt werden kann. Mit einem derartigen Ringkanal kann eine zuverlässige fluidische Kopplung zwischen Einspeisebereich und Übergabebereich unabhängig von einer rotatorischen Stellung zwischen Werkzeugspanner und Rotorwelle gewährleistet werden.

In weiterer Ausgestaltung der Erfindung ist vorgesehen, dass der Werkzeugspanner an einer axial ausgerichteten Stirnfläche des zweiten Endbereichs mit ersten, insbesondere als Bohrungen ausgebildeten, Kupplungsteilen einer Steckkupplung versehen ist, wobei die ersten Kupplungsteile für eine axiale Steckverbindung mit zweiten Kupplungsteilen der Steckkupplung ausgebildet sind. Mit einer solchen Steckkupplung wird in einfacher Weise ohne zusätzliche Montagearbeiten eine fluidische Kopplung zwischen dem Werkzeugspanner und einer dem Stator zugehörigen Komponente bei einem Einschieben des Rotors in den Stator ermöglicht.

Vorteilhaft ist, wenn die zweite Kupplungsaufnahme eine Riegeleinrichtung aufweist, die für eine lösbare Verriegelung des zweiten Kupplungsteils ausgebildet ist. Die Riegeleinrichtung dient einer axialen Verriegelung des Rotors am Stator und kann rein exemplarisch einen, insbesondere hydraulisch längs der Rotorachse bewegbaren, Aktor sowie vom Aktor in radialer Richtung bewegbare Riegelelemente, beispielsweise Riegelkugeln umfassen, wobei mit den Riegelelementen eine formschlüssige Verriegelung zwischen dem Stator und dem Rotor bewirkt wird. Bevorzugt ist vorgesehen, dass der Aktor und die damit bewegungsgekoppelten Riegelelemente von einer Federeinrichtung in einer Riegelstellung gehalten werden und eine Bereitstellung von Energie, beispielsweise in Form von Druckluft, zu einer Lösebewegung des Aktors und der damit bewegungsgekoppelten Riegelelemente führt, sodass der Rotor längs der Rotorachse aus dem Stator entnommen werden kann oder in den Stator montiert werden kann. Die Aufgabe der Drehdurchführung besteht darin, eine drehbewegliche Verbindung zwischen dem im bestimmungsgemäßen Gebrauch der Motorspindel rotierenden Rotor und einer stationär an einem Maschinenrahmen angebrachten Kühlmittelversorgung zu ermöglichen. Beispielhaft ist vorgesehen, dass die Drehdurchführung ein ortsfest am Stator festgelegtes, insbesondere hülsenförmiges, Gehäuse aufweist, an dem Fluidanschlüsse zur Verbindung mit der stationären Kühlmittelversorgung ausgebildet sind. In dem Gehäuse ist ein drehbeweglich gelagertes, beispielsweise kreiszylindrisch ausgebildetes, Kupplungsteil aufgenommen, dass an einer axialen Stirnfläche mit den zweiten Kupplungsteilen der Steckkupplung versehen ist. Beispielhaft ist vorgesehen, dass das Kupplungsteil wenigstens zwei Ringkanäle aufweist, die mit einem Kühlmittelzulauf der Kühlmittelversorgung bzw. einem Kühlmittelablauf der Kühlmittelversorgung in fluidisch kommunizierende Verbindung stehen und jeweils mit einem der zweiten Kupplungsteile der Steckkupplung fluidisch kommunizierend verbunden sind. Die benachbart an einer Außenumfangsfläche des Kupplungsteils ausgebildeten Ringkanäle können durch umlaufende Dichtungen wie Wellendichtringe fluidisch voneinander getrennt sein. Eine fluidische Trennung der Ringkanäle kann auch durch hydrodynamische Wellenabdichtungen verwirklicht werden. Ergänzend kann vorgesehen sein, dass in den Ringkanälen schaufelartige Strukturen verwirklicht sind, mit denen bei einer Rotation des Kupplungsteils gegenüber dem Gehäuse eine Pumpwirkung hervorgerufen wird, sodass die Drehdurchführung zusätzlich eine Förderwirkung für das Kühlmittel bereitstellen kann.

Bevorzugt ist vorgesehen, dass die Kühlbohrungen jeweils parallel zur Rotorachse ausgerichtet sind und dass am ersten Endbereich der Rotorwelle jeweils zwei Kühlbohrungen von einer, insbesondere in einer quer zur Rotorachse ausgerichteten Querschnittsebene angeordneten, Querbohrung verbunden sind.

Vorzugsweise ist vorgesehen, dass die Kühlbohrungen als Tieflochbohrungen in die Rotorwelle eingebracht werden, sodass eine Ausrichtung der Kühlbohrungen parallel zur Rotorachse für die Durchführung des Bohrvorgangs vorteilhaft ist. Gegebenenfalls ist vorgesehen, dass die Rotorwelle sowohl ausgehend von einer ersten Stirnfläche am Ende des ersten Endbereichs als auch ausgehend von einer zweiten Stirnfläche ausgehend von zweiten Endbereich jeweils mit Kühlbohrungen versehen wird, die beispielsweise in radialer Richtung versetzt zueinander angeordnet sind und durch eine in radialer Richtung ausgerichtete Querbohrung miteinander verbunden werden, wobei diese Querbohrung anschließend in Richtung des Außenumfangs der Rotorwelle verschlossen wird, beispielsweise durch Einpressen eines Dichtstopfens. Alternativ kann vorgesehen sein, dass die Kühlbohrungen als wendelförmige Nuten in eine Außenumfangsfläche der Rotorwelle eingebracht werden und anschließend eine hülsenförmige Außenhülle auf die Rotorwelle aufgebracht wird, insbesondere durch Aufschrumpfen oder Verkleben oder Verschweißen. Alternativ kann vorgesehen sein, dass die Rotorwelle in einem generativen Herstellungsverfahren, insbesondere durch Metall-Lasersintern, hergestellt wird, wobei in diesem Fall eine freie Gestaltungsmöglichkeit für die Geometrie der Kühlbohrungen gegeben ist.

In weiterer Ausgestaltung der Erfindung ist vorgesehen, dass die Kühlbohrungen jeweils axial an Stirnflächen der Rotorwelle ausmünden und die an den Stirnflächen ausgebildeten Mündungsöffnungen der Kühlbohrungen lösbar, insbesondere mit Madenschrauben, verschlossen sind. In Abhängigkeit von der Herstellungsweise der Rotorwelle sind die axiale Stirnfläche des Rotors ausmündenden Kühlbohrungen fertigungstechnisch bedingt und können bei einer Demontage des Rotors vom Stator zusätzlich dazu genutzt werden, die in den Kühlbohrungen verbliebene Kühlflüssigkeit abzulassen. Hierzu ist vorgesehen, dass die Kühlbohrungen an den Stirnflächen in lösbarer Weise verschlossen sind. Dies kann beispielsweise durch Verwendung von abdichtend wirkenden Madenschrauben verwirklicht werden, die im Bedarfsfall aus der jeweiligen Kühlbohrung herausgeschraubt werden, um ein Abfließen des Kühlmittels aus der Kühlbohrung zu ermöglichen.

Bei einer vorteilhaften Weiterbildung der Erfindung ist vorgesehen, dass an der Innenoberfläche der Aufnahmebohrung im Bereich des Übergangsbereichs wenigstens ein in radialer Richtung nach außen erstreckter Ringkanal ausgebildet ist und dass eine Kühlausgangsbohrung in den Ringkanal mündet. Der an der Innenoberfläche der Aufnahmebohrung ausgebildete Ringkanal erfüllt die gleiche Aufgabenstellung wie ein an der Außenumfangsfläche des Werkzeugspanners ausgebildeter Ringkanal. Bevorzugt ist vorgesehen, dass sowohl die Aufnahmebohrung der Rotorwelle als auch die Außenumfangsfläche des Werkstückhalters mit zueinander korrespondierenden Ringkanälen versehen sind, um eine möglichst widerstandsarme Flüssigkeitsströmung zwischen den Kühlbohrungen, den damit verbundenen Kühlausgangsbohrungen und den Übergabebohrungen zu gewährleisten.

Vorteilhaft ist es, wenn das erste Drehlager des ersten Kupplungsteils ein vorderes Schrägkugellager und ein hinteres Schrägkugellager umfasst, die eine O-Anordnung bilden, wobei eine starre Kopplung zwischen einem vorderen Innenring des vorderen Schrägkugellagers und einem hinteren Innenring des hinteren Schrägkugellagers und eine starre Kopplung zwischen einem vorderen Außenring des vorderen Schrägkugellagers und einem hinteren Außenring des hinteren Schrägkugellagers vorgesehen ist. Durch die starre Kopplung der jeweiligen Innenringe und der jeweiligen Außenringe der Schrägkugellager wird erreicht, dass das erste Drehlager bei einem bestimmungsgemä-ßen Gebrauch in einem Arbeitsbereich betrieben werden kann, in dem ein vorteilhafter Kompromiss zwischen einer maximalen Belastbarkeit des ersten Drehlagers und einer maximalen Lebensdauer des Drehlagers erzielt werden kann. Diese starre Kopplung setzt jedoch voraus, dass temperaturbedingte Ausdehnungen der einzelnen Komponenten, die das erste Drehlager bestimmen, möglichst geringgehalten werden, was durch die aktive Kühlung mittels der in der Rotorwelle ausgebildeten Kühlbohrungen sowie dem durch die Kühlbohrungen stattfindenden Kühlmittelstrom gewährleistet werden kann. Eine Einstellung der Vorspannung zwischen den beiden Schrägkugellagern kann beispielsweise unter Zuhilfenahme von Passscheiben (shims) vorgenommen werden.

Die erfindungsgemäße Motorwelle kann insbesondere bei einer Fräsmaschine, insbesondere einem Fräsbearbeitungszentrum, eingesetzt werden, wobei die Motorwelle für den Antrieb des Bearbeitungswerkzeugs, insbesondere Fräswerkzeugs, genutzt wird. Die Motorwelle kann starr an einem Maschinenrahmen angebracht werden, sofern ein in wenigstens einer, vorzugsweise in mehreren, Raumrichtungen beweglicher Werkstücktisch relativ zur Motorwelle bewegt werden kann. Typischerweise ist vorgesehen, dass die Motorspindel beweglich am Maschinenrahmen angebracht ist, beispielsweise durch Ankopplung an eine oder mehrere, insbesondere jeweils rechtwinklig zueinander angeordnete Verfahrachsen, sodass die Maschinenspindel in wenigstens eine, vorzugsweise in mehreren, Raumrichtung relativ zu einem Werkstücktisch bewegt werden kann.

Eine vorteilhafte Ausführungsform der Erfindung ist in der Zeichnung dargestellt. Hierbei zeigt:
- Figur 1: eine Schnittdarstellung einer Motorspindel mit einem Stator und einem Rotor, einem Werkzeugspanner, einer Betätigungseinheit und einer Drehdurchführung,
- Figur 2: eine Schnittdarstellung eines ersten Endbereichs des Rotors ohne den Werkzeugspanner,
- Figur 3: ein Teilschnitt des in der Figur 2 gezeigten Rotors,
- Figur 4: eine Schnittdarstellung eines zweiten Endbereichs des Rotors mit darin aufgenommenem Werkzeugspanner,
- Figur 5: eine Teilschnittdarstellung des zweiten Endbereichs des Rotors ohne darin aufgenommenem Werkzeugspanner,
- Figur 6: eine perspektivische Schnittdarstellung eines am zweiten Endbereich des Rotors ausgebildeten Ringkanals.

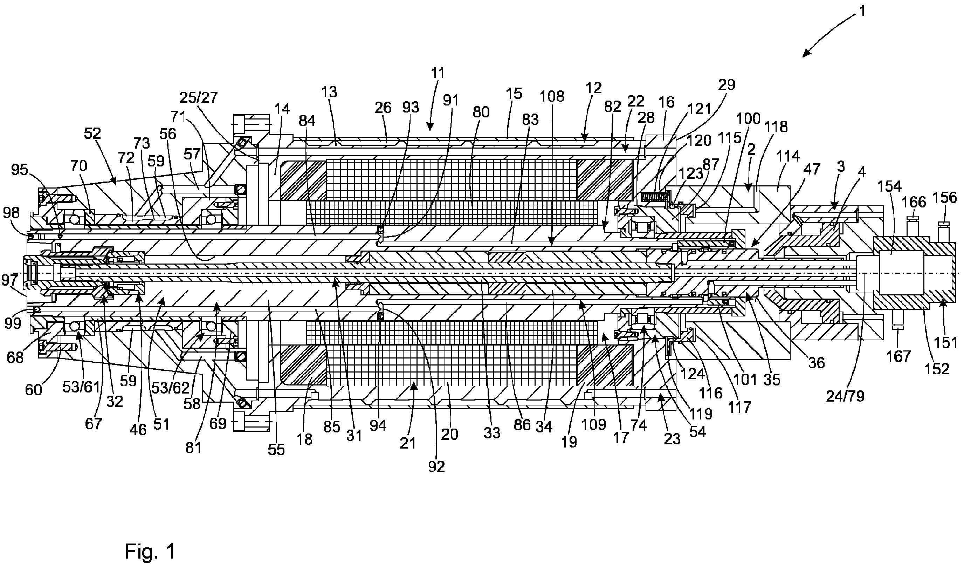

Eine in der Figur 1 in einer Schnittdarstellung gezeigte Motorspindel 1 ist zur Verwendung in einer nicht dargestellten Fräsmaschine vorgesehen. Die Motorspindel 1 ist zur Bereitstellung einer Rotationsbewegung eines nicht dargestellten Bearbeitungswerkzeugs, insbesondere eines Fräsers, mit einer Drehzahl von bis zu 20.000 Umdrehungen pro Minute ausgebildet. Prinzipiell handelt es sich bei der Motorspindel 1 um einen Elektromotor, der von einer nicht dargestellten Steuerung bereitgestellte elektrische Energie in die Rotationsbewegung für das Bearbeitungswerkzeugs umsetzen kann. Typischerweise umfasst die Motorspindel 1 einen Synchronmotor oder Asynchronmotor, wobei das zur Rotation des Bearbeitungswerkzeugs erforderliche Drehmoment durch magnetische Wechselwirkungen zwischen einem Stator 11 und einem Rotor 51 der Motorspindel 1 hervorgerufen wird.

Neben dem Stator 11 und Rotor 51, die unmittelbar zur Bereitstellung der Rotationsbewegung erforderlich sind, umfasst die Motorspindel 1 eine hydraulisch ansteuerbare Kupplung 2, eine hydraulisch ansteuerbare Betätigungseinheit 3 sowie eine Drehdurchführung 151. Die hydraulisch ansteuerbare Kupplung 2 ermöglicht eine axiale Festlegung des nachstehend näher beschriebenen Rotor 51 am ebenfalls nachstehend näher beschriebenen Stator 11. Die hydraulische Betätigungseinheit 3 ist für eine Betätigung eines dem Rotor 51 aufgenommenen Werkzeugspanners 31 vorgesehen, um damit ein nicht dargestelltes Bearbeitungswerkzeug am Werkzeugspanner 31 zu verriegeln und damit die Durchführung eines Bearbeitungsvorgangs mit dem Bearbeitungswerkzeug zu ermöglichen oder diese Verriegelung zu lösen, womit ein Austausch des Bearbeitungswerkzeugs ermöglicht wird. Die Drehdurchführung 151 ermöglicht die Zufuhr und Abfuhr einer Kühlflüssigkeit an den Rotor 51 sowie die Zufuhr eines Kühlschmiermittels an den im Rotor 51 aufgenommenen Werkzeugspanner 31.

Beispielhaft ist vorgesehen, dass der Stator 11 ein hülsenförmig ausgebildetes Statorgehäuse 12 aufweist, das exemplarisch aus einer kreiszylindrischen Innenhülse 13 mit einstückig angeformten Gehäuseboden 14 sowie einer Außenhülse 15 gebildet ist. An einem dem Gehäuseboden 14 entgegengesetzten axialen Endbereich des Statorgehäuses 12 ist ein separat ausgebildeter Abschlussdeckel 16 angebracht, der zusammen mit dem Statorgehäuse 12 einen im Wesentlichen kreiszylindrischen Statorraum 17 begrenzt. In dem Statorraum 17 sind ein vorderer Flussleitring 18, ein hinterer Flussleitring 19 sowie ein zwischen den beiden Flussleitringen 18, 19 angeordnetes, kreishülsenförmig ausgebildetes Spulenpaket 20 aufgenommen. Das Spulenpaket 20 bildet zusammen mit den beiden Flussleitringen 18, 19 ein erstes Magnetsystem 21. Um eine magnetische Wechselwirkung mit dem nachstehend näher beschriebenen Rotor 51 bewirken zu können, ist das Spulenpaket 20 in nicht näher dargestellter Weise mit einer elektrischen Ansteuerung verbunden, bei der es sich insbesondere um einen Frequenzumrichter handeln kann, der zur Bereitstellung elektromagnetischer Wechselfelder an das Spulenpaket 20 ausgebildet ist.

Wie der Darstellung der Figur 1 entnommen werden kann, sind die Innenhülse 13 mit dem daran angrenzenden Gehäuseboden 14 und der Abschlussdeckel 16 jeweils von Bohrungen durchsetzt, die einen ersten Kühlkanal 22 und einen zweiten Kühlkanal 23 bilden. Beispielhaft ist vorgesehen, dass der erste Kühlkanal parallel zu einer Statorachse 24 ausgehend vom Abschlussdeckel 16 die Innenhülse 13 und dem Gehäuseboden 14 durchsetzt und an einer axialen Stirnfläche 25 des Gehäusebodens 14 ausmündet. Ferner ist vorgesehen, dass der zweite Kühlkanal 23 ausgehend vom Abschlussdeckel 16 abschnittsweise in der Innenhülse 13 verläuft, um in radialer Richtung nach außen in einen wendelförmigen Kühlspalt 26 auszumünden, der zwischen der Innenhülse 13 und der Außenhülse 15 ausgebildet ist und der sich bis zu einem weiteren Abschnitt des zweiten Kühlkanals 23 erstreckt, der ebenfalls in der Innenhülse 13 ausgebildet ist und der den Gehäuseboden 14 durchsetzt und ebenfalls an der axialen Stirnfläche 25 des Gehäusebodens 14 ausmündet.

Die axiale Stirnfläche 25 dient auch als erste Kupplungsaufnahme 27, an der ein als erstes Kupplungsteil dienender Spindelkopf 52 des nachstehend näher beschriebenen Rotors 51 angekoppelt wird. Ferner wird ein als zweites Kupplungsteil dienendes zweites Drehlager 54 des Rotors 51 in einem als zweite Kupplungsaufnahme 28 bezeichneten Bohrungsabschnitt des Abschlussdeckels 16 aufgenommen.

An einer axialen Stirnfläche 29 des Abschlussdeckels 16, die der axialen Stirnfläche 25 des Gehäusebodens 14 abgewandt ist, ist die Kupplung 2 angebracht. Die Kupplung 2 umfasst ein Kupplungsgehäuse 114, das in nicht näher dargestellter Weise an Abschlussdeckel 16 angebracht ist und in dem eine koaxial zur Statorachse 24 ausgerichtete Ringnut 115 ausgebildet ist. In der Ringnut 115 ist ein linearbeweglich längs der Statorachse 24 beweglicher, ringförmig ausgebildete Arbeitskolben 116 abdichtend aufgenommen, der mit der Ringnut 115 einen größenvariablen Arbeitsraum 117 bestimmt. In den Arbeitsraum 117 mündet eine Druckluftleitung 118, die von einer außerhalb der Motorspindel 1 angeordneten, nicht dargestellten Druckluftquelle mit Druckluft versorgt werden kann, um eine Linearbewegung des Arbeitskolbens 116 zu relativ zum Kupplungsgehäuse 114 zu bewirken. Der Arbeitskolben 116 weist einen in Richtung des Gehäusebodens 14 weisenden, rotationssymmetrisch zur Statorachse 24 und rein exemplarisch L-förmig profilierten Ringbund 119 auf, der mit einer axialen Stirnfläche 120 an einer im Abschlussdeckel 16 aufgenommenen und parallel zur Statorachse 24 ausgerichteten Wendelfeder 121 anliegt. Die Wendelfeder 121 ist mit einer inneren axialen Vorspannung montiert und dient dazu, den Arbeitskolben 116 gemäß der Darstellung der Figur 1 nach rechts zu verlagern, sofern keine ausreichende Druckbeaufschlagung des Arbeitsraums 117 gegeben ist. Der Ringbund 119 ist mit Querbohrungen versehen, in denen rein exemplarisch als Kugeln ausgebildete Riegelelemente 123 aufgenommen sind, die ihrerseits an einer kegelförmig ausgebildeten Steuerfläche 124 anliegen. Bei einer Relativbewegung des Arbeitskolben 116 ausgehend von der Verriegelungsstellung, wie sie in der Figur 1 gezeigt ist, in eine nicht gezeigte Entriegelungsstellung werden die Riegelelemente 123 vom Arbeitskolben 116 in axialer Richtung längs der Statorachse 24 in Richtung des Gehäusebodens 14 verlagert und können dadurch eine Ausweichbewegung in radialer Richtung nach außen durchführen. Hiermit wird eine Entriegelung des Rotors 51 ermöglicht, der ansonsten aufgrund einer Wechselwirkung eines Halterings 87 mit den Riegelelementen 123 formschlüssig von der Kupplung 2 am Stator 11 gehalten wird.

Der Rotor 51 umfasst einen Spindelkopf 52, der zur Festlegung an dem Gehäuseboden 14 des Stators 11 ausgebildet ist. Wie der Darstellung der Figur 1 entnommen werden kann, sind in dem Spindelkopf 52 ein erster Kühlkanal 57 und ein zweiter Kühlkanal 58 sowie ein Ringkanal 59, der den ersten Kühlkanal 57 fluidisch mit dem zweiten Kühlkanal 58 verbindet, vorgesehen. Dabei erstreckt sich der erste Kühlkanal 57, der durch mehrere, fluidisch kommunizierend miteinander verbundene und nicht näher bezeichnete Bohrungen im Spindelkopf 52 verwirklicht ist, von der axialen Stirnfläche 25 des Gehäusebodens 14 bis zum Ringkanal 59 und steht in fluidisch kommunizierender Verbindung mit dem Kühlkanal 22 des Stators 11. Der zweite Kühlkanal 58 ist ebenfalls durch mehrere, fluidisch kommunizierend miteinander verbundene und nicht näher bezeichnete Bohrungen im Spindelkopf 52 verwirklicht und erstreckt sich von der axialen Stirnfläche 25 des Gehäusebodens 14 bis zum Ringkanal 59 und steht in fluidisch kommunizierender Verbindung mit dem Kühlkanal 23 des Stators 11.

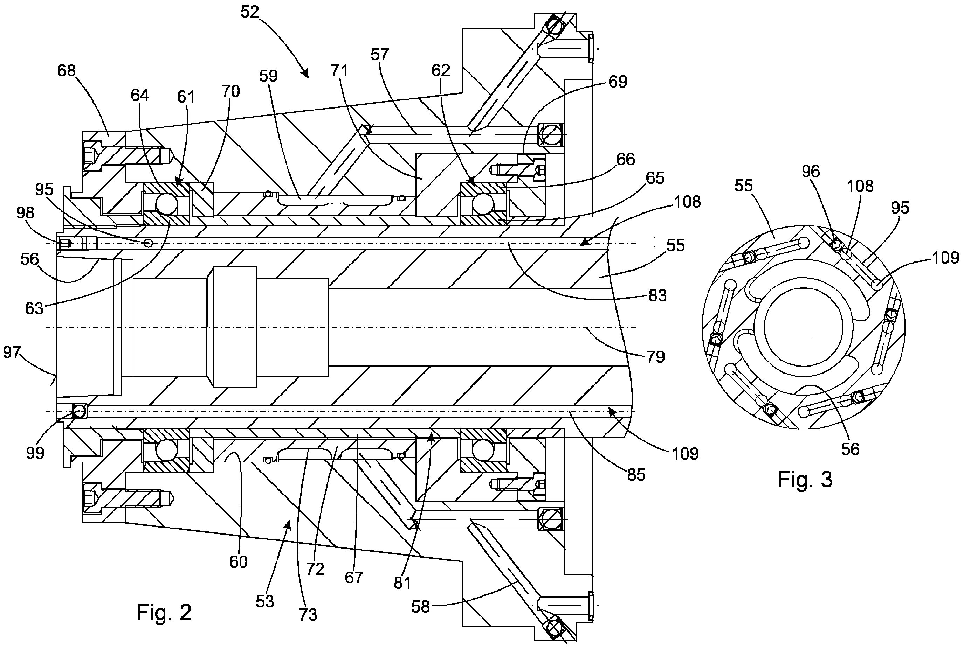

Ferner ist im Spindelkopf 52 das erste Drehlager 53 für die drehbeweglich gegenüber dem Spindelkopf 52 gelagerte Rotorwelle 55 ausgebildet. Beispielhaft umfasst das in der Darstellung der Figur 2 näher gezeigte erste Drehlager 53 ein erstes Schrägkugellager 61 und ein zweites Schrägkugellager 62, die in einer O-Anordnung platziert sind. Dabei sind sowohl das erste Schrägkugellager 61 als auch das zweite Schrägkugellager 62 starr im Spindelkopf 52 aufgenommen und bilden damit ein Festlager für die Rotorwelle 55. Beispielhaft ist vorgesehen, dass ein erster Innenring 63 des ersten Schrägkugellagers 61 und ein zweiter Innenring 65 des zweiten Schrägkugellagers 62 jeweils stirnseitig an einer Abstandshülse 67 anliegen, die zwischen den beiden Schrägkugellagern 61, 62 angeordnet ist. Ferner sind ein erster Außenring 64 des ersten Schrägkugellagers 61 und ein zweiter Außenring 66 des zweiten Schrägkugellagers 62 zwischen einer vorderen Deckplatte 68 und einer hinteren Deckplatte 69 aufgenommen. Hierbei wird ein Abstand zwischen dem ersten Außenring 64 und dem zweiten Außenring 66 von einem ersten Abstandsring 70, einer Abstandshülse 72 und einem zweiten Abstandsring 71 bestimmt, die in einer Längsbohrung 60 des Spindelkopfs 52 aufgenommen sind. Die Abstandshülse 72 ist mit einer umlaufenden Ringnut 73 versehen, die zusammen mit der Längsbohrung 60 des Spindelkopfs 52 den Ringkanal 59 begrenzt.

Während das erste Drehlager 53 einem ersten Endbereich 81 der Rotorwelle 55 zugeordnet ist, ist ein zweiter Endbereich 82 der Rotorwelle 55 mit einem in der Figur 1 dargestellten zweiten Drehlager 54 versehen. Das zweite Drehlager 54 ist als Loslager konzipiert und umfasst rein exemplarisch ein Zylinderrollenlager 74, das mit einem Innenring 75 an der Außenoberfläche 78 der Rotorwelle 55 festgelegt ist und mit einem Außenring 76 in einer Ausnehmung 88 des Halterings 87 aufgenommen ist, wobei zwischen dem Innenring 75 und dem Au-ßenring 76 mehrere als Zylinderrollen ausgebildete Wälzkörper 77 angeordnet sind. Der Außenring 76 wird in axialer Richtung von einem Stützring 89 gehalten, der mit dem Haltering 87 verschraubt ist. Wie bereits vorstehend beschrieben wurde, ist der Haltering 87 für eine formschlüssige Wechselwirkung mit der Kupplung 2 ausgebildet und umfasst hierfür eine radial nach innen erstreckte, umlaufende Nut 90, die für den Eingriff der Riegelelemente 123 ausgebildet ist.

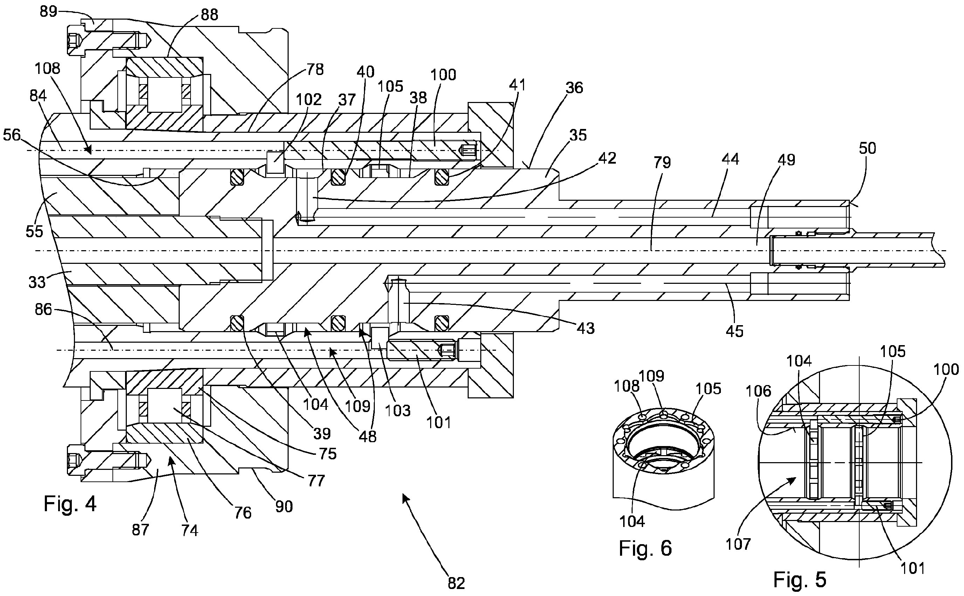

Die Rotorwelle 55 trägt eine als zweites Magnetsystem bezeichnete Spulenanordnung 80 und ist von einer Aufnahmebohrung 56 durchsetzt, wobei die Aufnahmebohrung 56 koaxial zu einer Rotorachse 79 ausgebildet ist. Die Rotorachse 79 ist koaxial zur Statorachse 24 ausgerichtet, wenn der Rotor 51 dem Stator 11 montiert ist. Die Rotorwelle 55 ist mit einer ersten Kühlbohrung 108 und mit einer zweiten Kühlbohrung 109 versehen, die jeweils aus zwei parallel zur Rotorachse 79 ausgerichteten Bohrungsabschnitten 83, 84 und 85, 86 und jeweils zur Verbindung dieser Bohrungsabschnitte 83, 84 und 85, 86 vorgesehenen und jeweils mit einem Dichtstopfen 93, 94 radial außen verschlossenen Querbohrungen 91, 92 fluidisch kommunizierend miteinander verbunden sind. Ferner ist vorgesehen, dass über den Umfang der Rotorwelle 55 rein exemplarisch insgesamt sechs Paare von Kühlbohrungen 108, 109, insbesondere in gleicher Winkelteilung, verteilt angeordnet sind und dass jeweils eine erste Kühlbohrung 108 über eine Querbohrung 95, die radial außen mit einem Dichtstopfen 96 verschlossen ist, mit einer zweiten Kühlbohrung 109 fluidisch kommunizierend verbunden ist, wie dies aus der Schnittdarstellung der Figur 3 entnommen werden kann. Ferner ist vorgesehen, dass sowohl der erste Bohrungsabschnitt 83 der ersten Kühlbohrung 108 als auch der erste Bohrungsabschnitt 85 der zweiten Kühlbohrung 109 an einer axialen Stirnfläche 97 der Rotorwelle 55 ausmünden. Hierbei ist vorgesehen, dass der erste Bohrungsabschnitt 83 der ersten Kühlbohrung 108 durch eine in der Figur 2 gut erkennbare Madenschraube 98 verschlossen ist, die im Bedarfsfall entfernt werden kann, um eine Entleerung der ersten Kühlbohrung 108 zu ermöglichen. Rein exemplarisch ist der erste Bohrungsabschnitt 85 der zweiten Kühlbohrung 109 mit einem Dichtstopfen 99 dauerhaft verschlossen. Wie der Darstellung der Figur 4 entnommen werden kann, sind sowohl der zweite Bohrungsabschnitt 84 der ersten Kühlbohrung 108 als auch der zweite Bohrungsabschnitt 86 der zweiten Kühlbohrung 109 jeweils durch Madenschrauben 100, 101 verschlossen und können im Bedarfsfall durch Entfernen der jeweiligen Madenschraube 100, 101 geöffnet und entleert werden.

Wie der Darstellung der Figuren 4 und 5 weiterhin entnommen werden kann, mündet die erste Kühlbohrung 108 in eine Kühlausgangsbohrung 102. Ferner mündet die zweite Kühlbohrung 109 in eine Kühlausgangsbohrung 103. Beide Kühlausgangsbohrungen 102, 103 sind quer zur Rotorachse 79 ausgerichtet und in axialer Richtung längs der Rotorachse 79 versetzt zueinander angeordnet. Beispielhaft ist vorgesehen, dass die jeweilige Kühlausgangsbohrung 102, 103 in einen Ringkanal 104, 105 ausmündet, der in eine Innenoberfläche 106 der Aufnahmebohrung 56 eingebracht ist. Die Länge des Ringkanals 104, 105 ist auf den axialen Spannhub des Werkzeugspanners abgestimmt. Wie der perspektivischen Schnittdarstellung der Figur 6 entnommen werden kann, wird der jeweilige Ringkanal 104, 105 durch eine Vielzahl von bogenförmigen Ausnehmungen, die jeweils die zugeordnete Kühlbohrung 108 bzw. 109 schneiden, gebildet. Die Ringkanäle 104, 105 bilden zusammen mit den Kühlausgangsbohrungen 102, 103 einen Übergabebereich 107, in dem eine Zufuhr von Kühlflüssigkeit in die ersten Kühlbohrung 108 und eine Abfuhr von Kühlflüssigkeit aus der zweiten Kühlbohrung 109 stattfindet.

Um diese Funktion des Übergabebereichs 107 zu gewährleisten, weist der gemäß der Figur 1 und der Figur 4 in der Aufnahmebohrung 56 angeordnete Werkzeugspanner 31 an einem zweiten Endbereich 47 einen Koppelabschnitt 35 auf, der für eine Aufnahme im Übergabebereich 107 der Aufnahmebohrung 56 vorgesehen ist und der nachstehend näher beschrieben wird.

Prinzipiell weist der Werkzeugspanner 31 an einem ersten Endbereich 46, der dem Endbereich 81 der Rotorwelle 55 zugeordnet ist, eine Werkzeugkupplung 32 auf, die in bekannter Weise für eine starre Aufnahme eines nicht dargestellten Bearbeitungswerkzeugs ausgebildet ist. Um ein Auswechseln des nicht dargestellten Bearbeitungswerkzeugs zu ermöglichen, ist eine Betätigung der Werkzeugkupplung 32 über ein Druckrohr 33 vorgesehen. Dieses Druckrohr 33 erstreckt sich zwischen der Werkzeugkupplung 32 und dem Koppelabschnitt 35 und wird mit Hilfe eines Federpakets 34, bei dem es sich beispielsweise um eine Anordnung einer Vielzahl von Tellerfedern handeln kann, in Richtung des zweiten Endbereichs 82 der Rotorwelle 55 vorgespannt. Ohne eine Druckkrafteinkopplung auf das Druckrohr 33 ist die Werkzeugkupplung 32 geschlossen und dass nicht dargestellte Bearbeitungswerkzeug ortsfest in der Werkzeugkupplung aufgenommen. Um eine Auswechslung des Bearbeitungswerkzeugs zu ermöglichen, stellt die endseitig an die Kupplung 2 angrenzende Betätigungseinheit 3 die einen hydraulisch längs der Rotorachse 79 verlagerbaren Arbeitskolben 4 aufweist, eine in Richtung des ersten Endbereichs 81 der Rotorwelle 55 ausgerichtete Linearbewegung bereit, wodurch der Koppelabschnitt 35 mit dem darin eingeschraubten Druckrohr 33 linear längs der Rotorachse 79 verlagert werden und ein Lösevorgang für die Werkzeugkupplung 32 bewirkt werden kann. Bei einer entgegengesetzten Linearbewegung des Arbeitskolbens 4 der Betätigungseinheit 3 erfolgt aufgrund der inneren Vorspannung des Federpakets 34 eine selbstständige Verriegelung der Werkzeugkupplung 32 und eines gegebenenfalls darin aufgenommenen Bearbeitungswerkzeugs.

Der in der Figur 4 näher dargestellte Koppelabschnitt 35 weist an einer Außenumfangsfläche 36 einen ersten Ringkanal 37 und einen zweiten Ringkanal 38 auf, die jeweils als umlaufende, in radialer Richtung nach innen vertiefte Nuten ausgebildet sind. Jedem der Ringkanäle 37, 38 ist beidseitig eine Dichtringnut 39, 40, 41 zugeordnet, der jeweils ein nicht bezeichneter O-Ring aufgenommen ist, der jeweils eine radiale Abdichtung zwischen dem Koppelabschnitt 35 und der Aufnahmebohrung 56 gewährleistet.

Jedem der Ringkanäle 37, 38 ist eine quer zur Rotorachse 79 ausgerichtete Übergabebohrung 42, 43 zugeordnet, wobei die erste Übergabebohrung 42 in fluidischer Kommunikation mit einem parallel zur Rotorachse 79 ausgerichteten ersten Fluidkanal 44 steht und wobei die zweite Übergabebohrung 43 in fluidische Kommunikation mit einem parallel zur Rotorachse 79 ausgerichteten zweiten Fluidkanal 45 steht. Jeder der Fluidkanäle 44, 45 mündet an einer axialen Stirnfläche 50 des Werkzeugspanners 31 aus und ist endseitig zur Aufnahme einer Kupplung ausgebildet, die an der Drehdurchführung 151 festgelegt sind. Beispielhaft ist vorgesehen, dass in dem Koppelabschnitt 35 jeweils drei erste Übergabebohrungen 42 mit zugeordneten ersten Fluidkanälen 44 und jeweils drei zweite Übergabebohrungen 43 mit zugeordneten zweiten Fluidkanälen 45 ausgebildet sind. Die beiden Ringkanäle 37, 38 bilden zusammen mit den Übergabebohrungen 42, 43 einen Einspeisebereich 48, mit dem eine Kühlmittelzufuhr an die erste Kühlbohrung 108 sowie eine Kühlmittelabfuhr von der zweiten Kühlbohrung 109 in der Rotorwelle 55 gewährleistet werden kann. Dabei ist die Breite des Ringkanals 37,38 am Werkzeugspanner 31 breiter ausgeführt als die Breite des Ringkanals 104, 105 an der Rotorwelle 55. Durch diese Maßnahme ist gewährleistet, dass die Dichtigkeit bei der Übergabe der Kühlflüssigkeit vom Werkzeugspanner 31 zur Rotorwelle 55 und von der Rotorwelle 55 zum Werkzeugspanner auch während der axialen Betätigung des Werkzeugspanners 31 gewährleistet ist.

Ferner erstreckt sich durch den Werkzeugspanner 31 eine koaxial zur Rotorachse 79 ausgerichtete Längsbohrung 49, die für eine Zufuhr von Kühlschmiermittel genutzt werden kann, das über die Drehdurchführung 151 bereitgestellt werden kann. Hierzu ist am Werkzeugspanner 31 eine in Richtung der Drehdurchführung 151 abragende Kopplungshülse 50 ausgebildet, die für eine fluidische Kopplung mit der Drehdurchführung 151 vorgesehen ist.

Beispielhaft ist vorgesehen, dass die Drehdurchführung 151 ein an der Betätigungseinheit 3 festgelegtes Gehäuse 152 aufweist, das nur schematisch dargestellt ist und in der Praxis mehrteilig ausgeführt wird. In dem Gehäuse 152 ist ein rotationssymmetrisch ausgebildeter, nur schematisch angedeuteter Drehverteiler 154 drehbeweglich aufgenommen. Beispielhaft ist der Drehverteiler 154 derart beschaffen, dass er über einen Schlauchanschluss 156 aus einer nicht dargestellten Kühlschmiermittelquelle mit Kühlschmiermittel versorgt werden kann, das über eine Mittenbohrung im Drehverteiler 154 und die Kopplungshülse 50 an die Längsbohrung 49 im Werkzeugspanner 31 zur Verfügung gestellt werden kann. Ferner ist der Drehverteiler 154 über einen Schlauchanschluss 166 in Verbindung mit einem Zulauf und über einen Schlauchanschluss 167 in Verbindung mit einem Ablauf mit einer nicht dargestellten Kühleinrichtung verbunden. Die Kühleinrichtung ist insbesondere zur Umwälzung und Kühlung eines Kühlmittels, insbesondere einer Flüssigkeit, ausgebildet.

Der Rotor 51 kann nach Öffnen der Kupplung 2 längs der Statorachse 24 aus dem Stator 11 herausgezogen werden, wobei hierdurch selbsttätig eine Entkopplung der fluidischen Verbindung zwischen Rotor 51 und Stator 11 bewirkt wird. In gleicher Weise wird bei einer Montage des Rotors 51 in den Stator 11 bei geeigneter rotatorische Ausrichtung des Koppelabschnitts 35 gegenüber der Drehdurchführung 151 eine selbstständige Kopplung der fluidischen Verbindung zwischen Rotor 51 und Stator 11 gewährleistet.

Die Lagerschmierung in den Drehlagern 53, 54 kann aufgrund der niedrigeren Temperaturen als Fett-Lebensdauerschmierung ausgelegt werden, so dass auf Vorrichtungen, z. B. eine Öl-Luftschmierung, zur Schmiermittelzufuhr an die Drehlager 53, 54 verzichtet werden kann.

## Patentansprüche

1. Motorspindel (1) zum Antreiben eines Bearbeitungswerkzeugs, mit einem längs einer Statorachse (24) erstreckten, hülsenförmigen Stator (11), der ein erstes Magnetsystem (21), eine erste Kupplungsaufnahme (27) und eine zweite Kupplungsaufnahme (28) aufweist, und mit einem Rotor (51), der eine längs einer Rotorachse (79) erstreckte Rotorwelle (55), ein zweites Magnetsystem (80), ein erstes Kupplungsteil (52) und ein zweites Kupplungsteil (54) aufweist, wobei das erste Kupplungsteil (52) an einem ersten Endbereich (81) der Rotorwelle (55) angeordnet ist und zur Festlegung an der ersten Kupplungsaufnahme (27) ausgebildet ist und mit einem als axiales Festlager ausgebildeten ersten Drehlager (53) drehbeweglich um die Rotorachse (79) an der Rotorwelle (55) gelagert ist und wobei das zweite Kupplungsteil (54) an einem zweiten Endbereich (82) der Rotorwelle (55) angeordnet ist und zur Festlegung an der zweiten Kupplungsaufnahme (28) ausgebildet ist und mit einem als axiales Loslager ausgebildeten zweiten Drehlager (54) drehbeweglich um die Rotorachse (79) an der Rotorwelle (55) gelagert ist, wobei die Rotorwelle (55) von einer längs der Rotorachse (79) erstreckten Aufnahmebohrung (56) durchsetzt ist, die zur Aufnahme eines Werkzeugspanners (31) ausgebildet ist, **dadurch gekennzeichnet, dass** die Rotorwelle (55) von Kühlbohrungen (108, 109) durchsetzt ist, die an einem Übergabebereich (107) ausmünden, der am zweiten Endbereich (82) der Rotorwelle (55) ausgebildet ist.

2. Motorspindel (1) nach Anspruch 1, **dadurch gekennzeichnet, dass** der Übergabebereich (107) an einer Innenoberfläche (106) der Aufnahmebohrung (56) ausgebildet ist und dass die Kühlbohrungen (108, 109) in die Aufnahmebohrung (56) ausmünden.

3. Motorspindel (1) nach Anspruch 2, **dadurch gekennzeichnet, dass** in der Aufnahmebohrung (56) ein Werkzeugspanner (31) angeordnet ist, der an einem ersten Endbereich (46) eine Werkzeugaufnahme (32) aufweist und der an einem zweiten Endbereich (47) mit einem Einspeisebereich (48) versehen ist, der Übergabebohrungen zur Kühlmittelzufuhr an dem Übergabebereich (107) und zur Kühlmittelabfuhr von dem Übergabebereich (107) aufweist.

4. Motorspindel (1) nach Anspruch 1, **dadurch gekennzeichnet, dass** an der Außenumfangsfläche (36) des Werkzeugspanners (31) im Bereich des Einspeisebereichs (48) wenigstens ein in radialer Richtung nach innen erstreckter Ringkanal (37, 38) ausgebildet ist und dass wenigstens eine im Werkzeugspanner (31) ausgebildete Übergabebohrung (42, 43) in den Ringkanal (37, 38) ausmündet.

5. Motorspindel (1) nach Anspruch 3 oder 4, **dadurch gekennzeichnet, dass** der Werkzeugspanner (31) an einer axial ausgerichteten Stirnfläche (50) des zweiten Endbereichs (47) mit ersten, insbesondere als Bohrungen (44, 45) ausgebildeten, Kupplungsteilen einer Steckkupplung versehen ist, wobei die ersten Kupplungsteile für eine axiale Steckverbindung mit zweiten Kupplungsteilen der Steckkupplung ausgebildet sind.

6. Motorspindel (1) nach Anspruch 5, **dadurch gekennzeichnet, dass** die zweite Kupplungsaufnahme (28) eine Riegeleinrichtung (2) aufweist, die für eine lösbare Verriegelung des zweiten Kupplungsteils (54) ausgebildet ist und/oder dass die zweiten Kupplungsteile der Steckkupplung drehbeweglich um die Statorachse (79) an einer Drehdurchführung (151) ausgebildet sind.

7. Motorspindel (1) nach einem der vorhergehenden Ansprüche, **dadurch gekennzeichnet, dass** die Kühlbohrungen (108, 109) jeweils parallel zur Rotorachse (79) ausgerichtet sind und dass am ersten Endbereich (81) der Rotorwelle (55) jeweils zwei Kühlbohrungen (108, 109) von einer, insbesondere in einer quer zur Rotorwelle (55) ausgerichteten Querschnittsebene angeordneten, Querbohrung (95) verbunden sind.

8. Motorspindel (1) nach einem der vorhergehenden Ansprüche, **dadurch gekennzeichnet, dass** die Kühlbohrungen (108, 109) jeweils axial an Stirnflächen der Rotorwelle (55) ausmünden und die an den Stirnflächen ausgebildeten Mündungsöffnungen der Kühlbohrungen (108, 109) lösbar, insbesondere mit Madenschrauben, verschlossen sind.

9. Motorspindel (1) nach einem der vorhergehenden Ansprüche, **dadurch gekennzeichnet, dass** an der Innenoberfläche (106) der Aufnahmebohrung (56) im Bereich des Übergabebereichs (107) wenigstens ein in radialer Richtung nach außen erstreckter Ringkanal (104, 105) ausgebildet ist und dass eine Kühlausgangsbohrung (102, 103) in den Ringkanal (104, 105) mündet.

10. Motorspindel (1) nach einem der vorhergehenden Ansprüche, **dadurch gekennzeichnet, dass** das erste Drehlager (53) des ersten Kupplungsteils (52) ein vorderes Schrägkugellager (61) und ein hinteres Schrägkugellager (62) umfasst, die eine O-Anordnung bilden, wobei eine starre Kopplung zwischen einem vorderen Innenring (63) des vorderen Schrägkugellagers (61) und einem hinteren Innenring (65) des hinteren Schrägkugellagers (62) und eine starre Kopplung zwischen einem vorderen Außenring (64) des vorderen Schrägkugellagers (61) und einem hinteren Außenring (66) des hinteren Schrägkugellagers (62) vorgesehen ist.
